# EUROPEAN PATENT APPLICATION

(11) **EP 0 525 521 A1**
(43) Date of publication of application: **03.02.1993**
(21) Application number: 92112115.8
(22) Date of filing: 15.07.1992
(51) Int. Cl.: B01D 53/04

(54) **Gas separator system**

(30) Priority: 01.08.1991 JP 192979/91; 12.09.1991 JP 232757/91
(71) Applicant: MITSUBISHI JUKOGYO KABUSHIKI KAISHA, Tokyo (JP)
(72) Inventor: Kai, Norichika, c/o Nagasaki Shipyard & Mach. Wrks, Nagasaki-shi, Nagasaki-ken (JP); Kaneko, Shozo, c/o Nagasaki Shipyard & Mach. Works, Nagasaki-shi, Nagasaki-ken (JP); Abe, Tsugiya, c/o Nagasaki Shipyard & Mach. Works, Nagasaki-shi, Nagasaki-ken (JP)
(74) Representative: Henkel, Feiler, Hänzel & Partner

(57) **Abstract**

The known pressure-swing adsorption type gas separator system, in which two adsorption vessels and two switching valves for respectively switching the two adsorption vessels selectively to a raw gas source and to an exhaust gas side, and the adsorption vessels are alternately switched between a pressurized adsorption step of process and a reduced-pressure desorption step of process by switching of the switching valves to perform separation of gases, is improved so as to make it possible to use a switching valve having a large bore diameter well adapted to a flow rate of raw gas, to reduce a number of switching valves, to simplify separator system, to facilitate operations of a switching valve at a high frequency, and to prolong a life of a switching valve. The improvements reside in that the switching valve is composed of a four-port rotary valve (3) having four ports (P, E, 1 a, 2a) connected to two adsorption vessels (1, 2), a raw gas source (5) and an exhaust gas side (7) and driven by a rotary drive source (15) for switching the two adsorption vessels (1, 2) selectively to the raw gas source (5) and to the exhaust gas side (7). Preferably, as the rotary drive source for the four-port rotary valve (26), a drive motor (22) for a pressurizing pump (21) provided in a raw gas line is commonly used, and the four-port rotary valve (26) is connected to the drive motor (22) via speed reduction means (25).

## Description

### BACKGROUND OF THE INVENTION:

### 1. Field of the Invention:

The present invention relates to a pressure-swing adsorption type gas separator system which is suitable for practicing a process of separating, for instance, oxygen gas and nitrogen gas from air.

### 2. Description of the Prior Art:

One example of a pressure-swing adsorption type gas separator system in the prior art is schematically shown in Fig. 10. In this system, raw gas is intermittently fed to a plurality of adsorption vessels 41 A and 41 B each accommodating adsorbent to be adsorbed thereby and to obtain refined gas having passed through the adsorption vessels 41 A and 41 B, also while interrupting the above-mentioned feeding of the raw gas, the gas adsorbed by the adsorbent is desorbed from the adsorbent and exhausted, and thereby the raw gas is refined and separated. In this gas separator system, directions of flows of gases are switched at a high frequency, and for the purpose of direction control for these flows of gases, switching valves 42A and 42B consisting of electromagnetic valves, pneumatically operable valves or the like are employed.

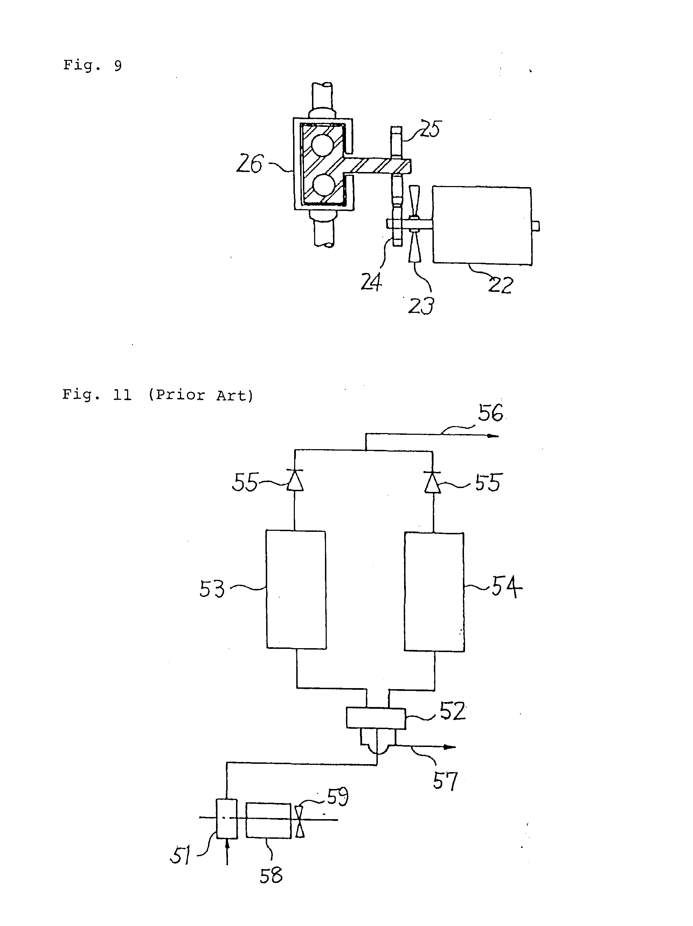

Also, another example of a pressure-swing adsorption type gas separator system in the prior art, which was designed to work for separating air, is schematically shown in Fig. 11. In this system, air which is gas to be processed, is pressurized by an air pump 51, then it is introduced into an adsorption tower 53 or 54 operating in an adsorption step of process by switching gas flows by means of a five-port electromagnetic valve 52, thus nitrogen in the air is adsorbed by nitrogen adsorbent within the adsorption tower, and concentrated oxygen gas 56 is collected via a check valve 55. On the other hand, an adsorption tower 54 or 53 operating in a reproduction step of process is communicated with an exhaust gas system 57 held at the atmospheric pressure via the five-port electromagnetic valve 52, and nitrogen adsorbed within the adsorption tower 54 or 53 is desorbed under a reduced pressure and exhausted through the exhaust gas system 57. The switching between the pressurized adsorption step of process and the reduced-pressure desorption-reproduction step of process is effected by driving the five-port electromagnetic valve 52 by feeding an electric current to an electromagnetic coil. It is to be noted that the air pump 51 is driven by a motor 58, and this motor 58 is associated with a cooling fan 59.

However, in the above-described gas separator systems in the prior art, as a switching valve for raw gas flowing at a large flow rate an electromagnetic valve having a large bore diameter is necessitated, and this would be a valve generating a large electromagnetic force. Alternatively, if a different system, in which a pneumatically operable valve having an electromagnetic valve for switching operations is separately provided, is employed, then there is a shortcoming that the system becomes complex and control air (or pressure) becomes necessary. Furthermore, the above-mentioned electro-magnetic valve or the electromagnetic valve for switching operations cannot be expected to have a long life time because they are required to perform switching of opening/closing at a high frequency.

On the other hand, in the gas separator system shown in Fig. 11, as switching means for gas flows, a fiveport electromagnetic valve is provided on the feed side of gas to be processed of an absorption tower, and at every predetermined period the five- port electromagnetic valve is switched as controlled by a sequencer, a timer, a micro-computer or the like. However, this system involved the problem that according to this method, if a voltage should vary during an operation of the system, a capability of an air pump would vary regardless of whether an A.C. motor is used or a D.C. motor is used, and for instance, if a voltage should lower, then due to lowering of an outlet pressure of the air pump, a feed amount of air would be reduced, hence the pressure in the absorption tower cannot be raised up to a predetermined pressure within a fixed time, and an oxygen concentration of product gas would be lowered.

### SUMMARY OF THE INVENTION:

A principal object of the present invention is to provide a pressure-swing adsorption type gas separator system, which has resolved the above-described problems involved in the heretofore known gas separator system, which does not necessitate an electromagnetic valve exerting a large electromagnetic force, and which can maintain a long life even under switching operations at a high frequency.

A more specific object of the present invention is to provide a pressure-swing adsorption type gas separator system, which is free from the shortcomings of the gas separator system in the prior art, and in which switching between adsorption and regeneration is effected without relying upon the method of switching at every predetermined period by making use of a sequencer, a timer or a micro-computer, the operation can be switched to a regeneration step of process after the pressure in an adsorption tower has been grown to a predetermined pressure, and thereby lowering of a concentration of product gas can be avoided.

According to one feature of the present invention, there is provided a pressure-swing adsorption type gas separator system provided with two adsorption vessels and switching valves for respectively switching the two adsorption vessels selectively to a raw gas source and to an exhaust gas side, in which the two adsorption vessels are alternately switched between a pressurized adsorption step of process and a reduced-pressure desorption step of process by switching the switching valves to perform separation of gases; improved in that the switching valve is composed of four-port rotary valve having four connection ports connected to two adsorption vessels, a raw gas source and an exhaust gas side and driven by a rotary drive source for switching the two adsorption vessels selectively to the raw gas source and to the exhaust gas side.

According to another feature of the present invention, there is provided the above-featured gas separator system, further improved in that the four-port rotary valve is connected to a rotary drive source via an intermittent rotary transmission device.

According to still another feature of the present invention, there is provided the last-featured gas separator system, further improved in that the intermittent rotary transmission system is formed of a gear type intermittent rotary transmission device making use of Geneva gears.

According to yet another feature of the present invention, there is provided the first-featured gas separator system, further improved in that as the rotary drive source for the four-port rotary valve, a drive motor for a pressurizing pump provided in a raw gas line is commonly used, and the four-port rotary valve is connected to the drive motor via speed-reduction means.

According to a further feature of the present invention, there is provided the just-featured gas separator system, further improved in that the speed reduction means is composed of speed reduction gears.

As described above, according to the present invention, owing to the above-described structural features, switching between connections of a raw gas source to one adsorption vessel and the other adsorption vessel to the exhaust gas side and the reverse connections is successively and alternately repeated by means of a four-port rotary valve rotationally driven by a rotary drive source. More particularly, a raw gas source is connected to one adsorption vessel via a four-port rotary valve, hence raw gas is introduced into the adsorption vessel, in which an adsorptive component is adsorbed by adsorbent, while the other adsorption vessel is connected to an exhaust gas side, hence the gas component adsorbed by the adsorbent is desorbed and exhausted to the exhaust gas side, and the adsorbent is regenerated.

Since the switching valve used in the system according to the present invention is of rotary type and is driven by a rotating drive source as described above, the valve can be designed so as to have a large bore diameter, has a long life, and does not necessitate air for control purpose and the like.

In addition, in the gas separator system according to the present invention, since this four-port rotary valve is connected to a motor for a pressurizing pump via speed reduction means, it is possible to make a raw gas feed amount of the pressurizing pump and the rotary angle of the four-port rotary valve proportional to each other, and if a speed reduction ratio of the speed reduction means is appropriately preset, switching of the four-port rotary valve can be completed at the time point when a predetermined amount of raw gas has been fed. According to this method, since the four-port rotary valve can be switched in accordance to a feed amount of raw gas even if a rotational speed of a pressurizing pump is varied due to variation of a voltage, the final pressure of an adsorption step of process can be made a predetermined value, and so, lowering of a concentration of collected gas can be obviated.

The above-mentioned and other objects, features and advantages of the present invention will become more apparent by reference to the following description of preferred embodiments of the present invention taken in conjunction with the accompanying drawings.

### BRIEF DESCRIPTION OF THE DRAWINGS:

In the accompanying drawings:
Fig. 1 is a system diagram of one preferred embodiment of the present invention, in which different states of connection of a switching valve are shown at (a) and at (b), respectively;
Fig. 2 is a schematic view partially in cross-section of a drive mechanism for the switching valve in the same preferred embodiment;
Fig. 3 is a schematic view of Geneva gears used in the same preferred embodiment;
Fig. 4 is a schematic view illustrating operations of the switching valve used in the same preferred embodiment, in which different states of the switching valve including a switching disc placed at different positions are shown at (a) and at (b), respectively;
Fig. 5 is a diagram showing a relation between moving and stopping states of Geneva gears and an extent of opening of a port of the switching valve by the switching disc depending upon the state of the Geneva gears;
Fig. 6 is a diagram showing a relation between pressure swings in the respective adsorption vessels and states of connection of the switching valve ports;
Fig. 7 is a system diagram of a pressure-swing adsorption type air separator according to another preferred embodiment of the present invention;
Fig. 8 is a cross-section view of a four-port rotary valve used in the second preferred embodiment shown in Fig. 7;
Fig. 9 is an enlarged schematic cross-section view showing a relation between a motor for driving an air pump and the four-port rotary valve in the same preferred embodiment;
Fig. 10 is a system diagram of a gas separator system in the prior art; and
Fig. 11 is a system diagram of another pressure-swing type air separator system in the prior art.

### DESCRIPTION OF THE PREFERRED EMBODIMENTS:

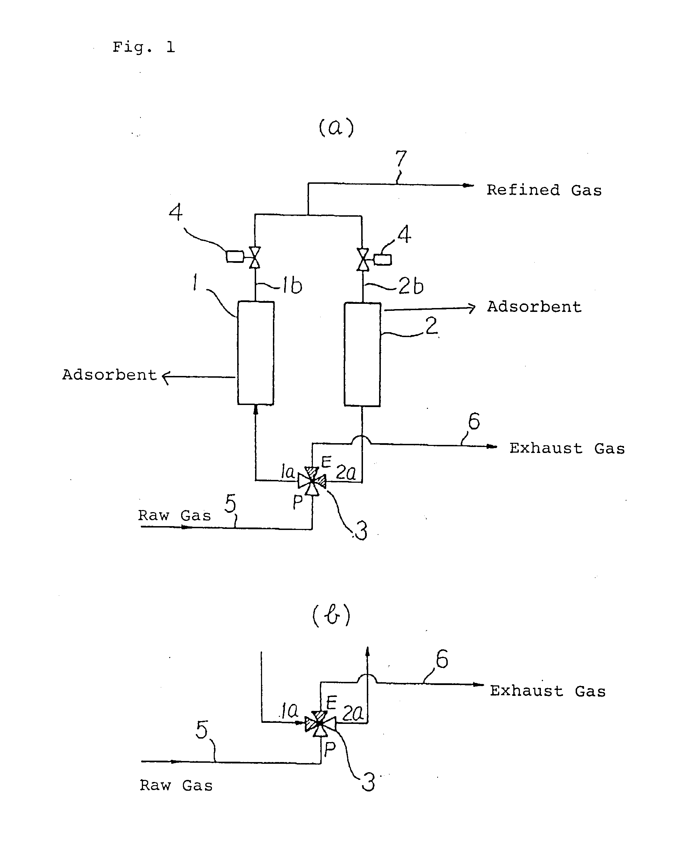

Now one preferred embodiment of the present invention will be described with reference to Figs. 1 to 6. The illustrated embodiment relates to a pressure-swing type gas separator system, which comprises two adsorption vessels 1 and 2 respectively containing adsorbent as shown in Fig. 1, and as will be described in detail in the following, provision is made such that adsorption may be effected in one of the adsorption vessels, while desorption may be effected in the other adsorption vessel, and they may be sequentially and alternately repeated.

The bottom portion of the adsorption vessel 1 is connected to a rotary type switching valve 3 which consists of a four-port rotary valve, and exhaust lines 1 and 2b respectively connected to the top portions of the adsorption vessels 1 and 2 and respectively including stop valves 4, are connected to a common refined gas line 7.

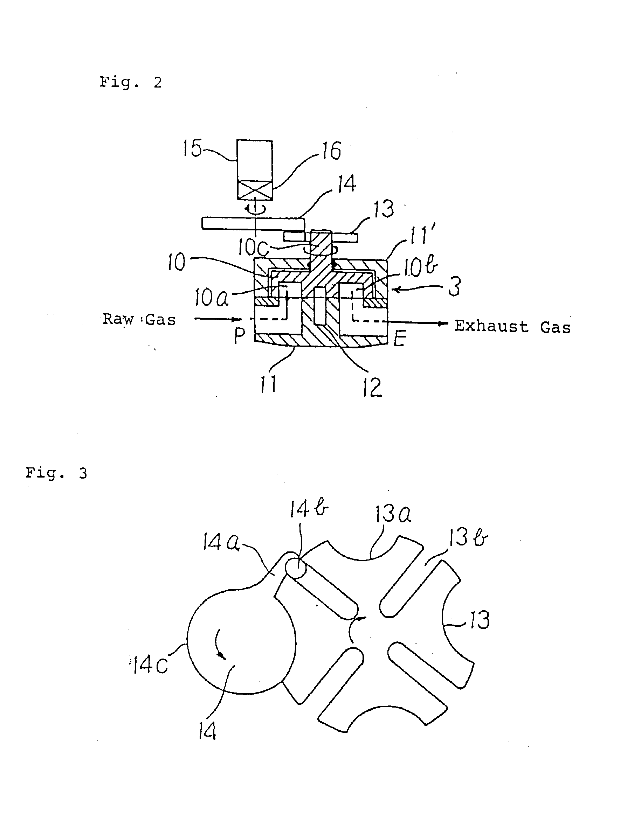

As shown in Fig. 2, the above-described rotary type switching valve 3 comprises a fixed valve body 11 of circular shape in cross-section, a disc 10 rotatable about the center axis of the same valve body 11 via a rotary center pin 12, and a top cover 11' covering the disc 10 and fixed to the valve body 11.

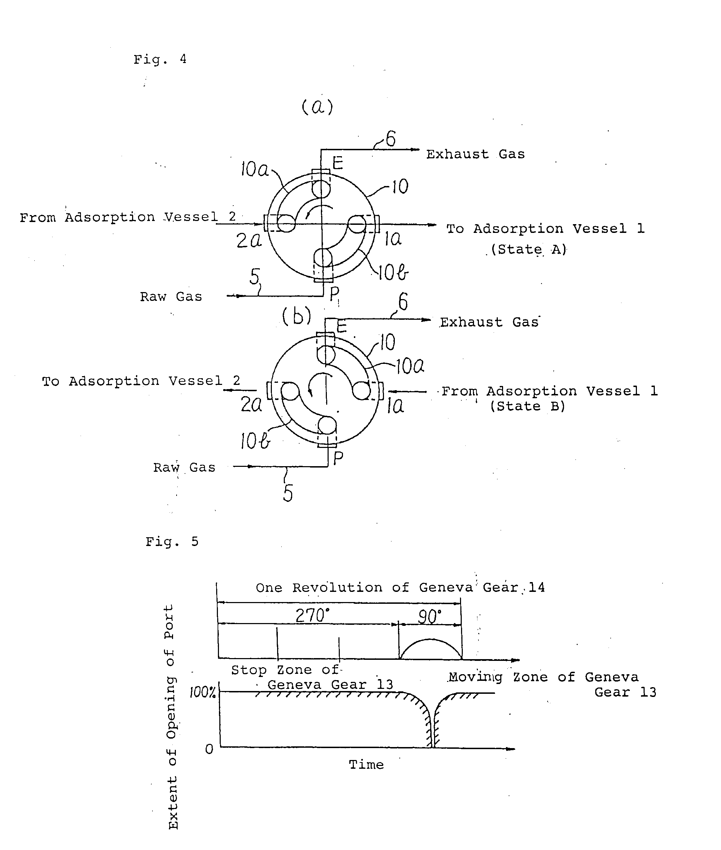

As shown in Figs. 2 and 4, the above-mentioned valve body 11 is provided with four ports P, 1a, E and 2a of L-shape in cross-section, which open on its circumferential surface at equal intervals, that is, at the positions angularly spaced by 90 about the rotary center pin 12, and also which extend radially inwards within the valve body 11 and then open at the top of the valve body 11. On the other hand, in the disc 10 are provided two circular-arc-shaped slots 10a and 10b extending in the angular range of 90 about the rotary center pin 12 and disposed at opposite side positions with respect to the rotary center pin 12 so that they can communicate the openings at the top of the valve body 11 of the adjacent ones of the above-described ports P, l a, E and 2a.

The openings at the circumference of the valve body 11 of the aforementioned ports P, 1 a, E and 2a are connected respectively to a raw gas line 5 under a pressurized condition, the bottom of the adsorption vessel 1, an exhaust gas line 6 under a reduced-pressure condition, and the bottom of the adsorption vessel 2.

In addition, as shown in Fig. 2, at the center of the disc 10 is provided a shaft 10c extending upwards and penetrating the top cover 11', at the upper portion of the same shaft 10c is mounted a Geneva gear 13, and this Geneva gear 13 is meshed with a Geneva gear 14 which is rotationally driven by a motor 15 rotating at a constant speed via speed reduction gears 16.

As shown in Fig. 3, the Geneva gear 13 is provided with four recesses 13a each having a circular-arc-shaped periphery and four grooves 13b directed in the radial direction and opening outwards at the positions between the adjacent recesses 13a. The Geneva gear 14 has a circular main body 14c and an arm 14a extending outwards, it is disposed in such manner that its lower surface may be positioned a little above the upper surface of the Geneva gear 13, and an engaging portion 14b at the tip end of the arm 14a is adapted to engage with and slide along the groove 13b of the Geneva gear 13. Accordingly, when the Geneva gear 14 is rotated in the direction of an arrow in Fig. 3 by the motor 15 via the speed reduction gears 16, during the period of 1/4 revolutions of the Geneva gear 14 when the engaging portion 14b of the arm 14a of the Geneva gear 14 engages with the groove 13b of the Geneva gear 13, the Geneva gear 3 rotates by 90 about its center axis, and during the period of 3/4 revolutions of the Geneva gear 14 when the engaging portion 14b of the above-mentioned arm 14a disengages from the above-mentioned groove 13b, the Geneva gear 13 stops.

In the illustrated embodiment, the disc 10 in the switching valve 3 is rotated intermittently each time by 90 by the motor 15 via the Geneva gears 13 and 14. Accordingly, at a given time, the circular-arc-shaped grooves 10a and 10b take the state A shown at (a) in Fig. 4, subsequently they transfer to the state B shown at (b) in Fig. 4, and these states A and B are sequentially and alternately repeated.

Under the state A, the port P and the port 1 a in the valve body 11 are communicated by the circular-arc-shaped groove 10b, hence the raw gas under a pressurized condition is introduced to the adsorption vessel 1 through the port P and the port l a, and after adsorptive component gas in the raw gas has been adsorbed by the adsorbent in the same vessel 1, refined gas is derived from a gas line 7 through the exhaust gas line 1 b in which the stop valve 4 is opened. On the other hand, the port E and the port 2a in the valve body 11 are communicated via the circular-arc-shaped groove 10a, hence the inside of the adsorption vessel 2 is connected to the exhaust gas line 6 under a reduced-pressure condition, thus the inside of the adsorption vessel 2 is reduced in pressure, the adsorbed gas is desorbed from the adsorbent to be exhausted to the exhaust gas line 6, and regeneration of the adsorbent is effected. It is to be noted that at this time the stop valve 4 in the exhaust line 2b of the adsorption vessel 2 is kept closed.

Under the state B, on the contrary, raw gas is introduced into the adsorption vessel 2 to obtain refined gas, and regeneration of the adsorbent within the adsorption vessel 1 is effected.

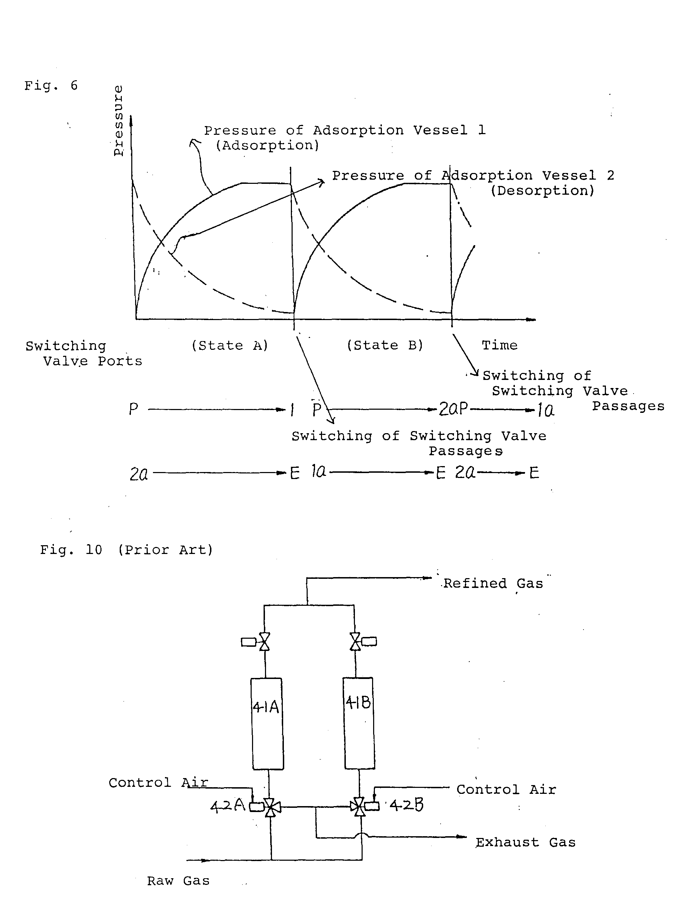

Fig. 6 shows swinging of the pressures in the respective adsorption vessels 1 and 2 and the connecting conditions of the respective ports under the state A and under the state B in the illustrated embodiment.

Fig. 5 shows a relation between the moving and stopping conditions of the Geneva gear 13 caused by the Geneva gear 14 and the extent of opening of the port resulted from the movement of the Geneva gears 13 and 14.

As described above, in the illustrated embodiment, by intermittently rotating the disc 10 by the motor 15 via the speed reduction gears 16 and the Geneva gears 13 and 14, the adsorption vessels 1 and 2 can be selectively connected to the raw gas line 5 or the exhaust gas line 6 by means of the circular-arc-shaped grooves 10a and 10b in the disc 10, and hence it is possible to cause adsorptive gas in the raw gas to be adsorbed by the adsorbent within the adsorption vessels and to cause adsorbed gas to be desorbed from the adsorbent to perform regeneration of the adsorbent.

Also, in the illustrated embodiment since the disc 10 of the rotary type switching valve 3 performs switching of ports in the above-described manner by being rotationally driven intermittently by the constant-speed motor 15 via the Geneva gears 13 and 14, the switching valve 3 can be designed to have a large bore diameter, its life is long, and it does not necessitate control air or the like. Furthermore, in this preferred embodiment, a necessary time interval of opening and closing of the valve can be easily preset.

While circumscribing type Geneva gears 13 and 14 were employed in the above-described embodiment, these could be designed as inscribing type Geneva gears, or in place of the Geneva gears, other intermittent rotation transmission means such as a ratchet drive including a ratchet wheel and a pressure claw, an intermittent gearing in which teeth of one of gears meshed with each other are partly removed, or the like could be employed.

The above-described embodiment of the present invention can achieve the following effects:
(1) A directional switching valve can be formed as a valve having a sufficiently large bore diameter which can be adapted to a flow rate of raw gas.
(2) A number of switching valves can be reduced as compared to a pneumatically operated valve.
(3) Since high-pressure air for operation is unnecessary, the system is simplified.
(4) Highly frequent opening/closing operations by means of a directional switching valve are easy, and also a life of the valve can be prolonged.

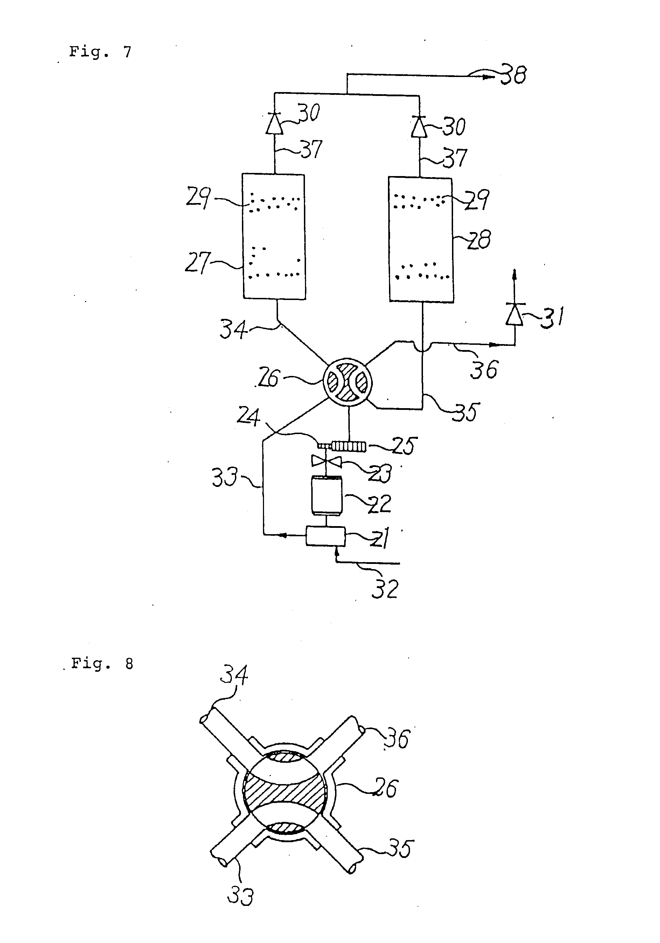

Next, another preferred embodiment of the present invention will be explained with reference to Figs. 7 to 9.

Fig. 7 is a general view of a pressure-swing adsorption type gas separator system, Fig. 8 is a cross-section view of a four-port rotary valve, and Fig. 9 is an enlarged view showing a relation between a motor for a pressurizing pump and a four-port rotary valve. Air, which is gas to be processed, is introduced into an air pump 21 via an intake pipe 32, then pressurized, and sent through a pump outlet pipe 33 into a four-port rotary valve 26. The four-port rotary valve 26 includes four openings and a rotor having a structure adapted to communicate adjacent two openings, as shown in Fig. 8. As shown in Fig. 9, a speed reduction gear 25 is mounted to the shaft of this rotor, and a drive gear 24 is mounted to the shaft of the motor 22 for driving the air pump 21. Since the driving torque of the motor 22 for the air pump 21 is transmitted to the four-port rotary valve 26 as reduced in speed by meshing the drive gear 24 with the speed reduction gear 25, the air pump 21 and the four-port rotary valve 26 rotate as interlocked with each other. In other words, during the period when the air pump 21 is operating, the four-port rotary valve 26 is also always rotating. And by determining a speed reduction ratio by appropriately selecting the numbers of teeth of the drive gear 24 and the speed reduction gear 25, the timing of switching of the four-port rotary valve 26 can be determined depending upon a feed rate of air.

Under the condition shown in Fig. 7, an outlet pipe 33 of the air pump 21 is connected to a conduit 34 of an adsorption tower 27, hence air pressurized by the air pump 21 is introduced to the adsorption tower 27, nitrogen gas in the air is adsorbed by granular nitrogen adsorbent within the tower 27, and a non-adsorptive component of oxygen gas flows from an outlet pipe 37 through a check valve 30 and is collected as condensed oxygen gas 38.

On the other hand, an adsorption tower 28 has its conduit 35 at the bottom connected to a nitrogen gas exhaust pipe 36 via the four-port rotary valve 26, and further communicates with the outside of the system held at the atmospheric pressure via a check valve 31. Accordingly, nitrogen gas kept adsorbed by the nitrogen adsorbent 27 within the adsorption tower 28 is desorbed under a reduced pressure and exhausted to the outside of the system. When a fixed amount of air has been fed to the adsorption tower 27 and a predetermined pressurized condition has been realized, a rotor of the four-port rotary valve 26 interlocked with rotation of the air pump 21 is rotated by 90°, then the outlet pipe 33 of the air pump 21 is connected to the conduit 35, the conduit 34 of the adsorption tower 27 is connected to the nitrogen gas exhaust pipe 36, and thus switching of flow passages between a pressurized adsorption step of process and a reduced pressure desorptionregeneration step of process is completed.

As described above, by making use of the drive source for the air pump to simultaneously rotate the four-port rotary valve, flow passages of the adsorption towers can be switched in the sequence of adsorption-regeneration-adsorption depending upon a feed amount of air to the adsorption towers, and so, it has become possible to continuously perform predetermined separation by adsorption regardless of variation of a capability of an air pump caused by voltage variation or the like.

By employing the above-described construction, it is possible to rotate a four-port rotary valve for use in switching of flow passages of adsorption towers as interlocked with a drive source for a pump for pressurizing gas to be processed, and it is possible to finish an adsorption step of process depending upon a feed amount of gas to be processed to the adsorption towers. Therefore, even if a feed rate of the gas to be processed should be reduced as a result of voltage variations, frequency variations or the like, since the rotary speed of the four-port rotary valve is lowered depending upon the reduction of the feed rate and the cycle time is prolonged, the pressure in the adsorption tower would rise automatically until a predetermined pressure is established. Consequently, the non-adsorptive component gas forming the product gas can be collected without lowering its concentration. In addition, associated equipments such as a motor for driving the four-port rotary valve, a sequencer, a timer or a micro-computer for controlling the motor can be omitted, and so, a cost of the system is also reduced.

Since many changes and modifications can be made to the above-described constructions without departing from the spirit of the present invention, it is intended that all matter contained in the above- description and illustrated in the accompanying drawings shall be interpreted to be illustrative and not in a limiting sense.

## Claims

1. A pressure-swing adsorption type gas separator system provided with two adsorption vessels and switching valves for respectively switching said two adsorption vessels selectively to a raw gas source and to an exhaust gas side, in which the two adsorption vessels are alternately switched between a pressurized adsorption step of process and a reduced-pressure desorption step of process by switching of said switching valves to perform separation of gases; characterized in that said switching valve is composed of a four-port rotary valve (3, 26) having four connection ports connected to two adsorption vessels (1, 2; 27, 28), a raw gas source and an exhaust gas side and driven by a rotary drive source (15, 22) for switching the two adsorption vessels selectively to the raw gas source and to the exhaust gas side.

2. A pressure-swing adsorption type gas separator system as claimed in Claim 1, further characterized in that said four-port rotary valve (3) is connected to a rotary drive source via an intermittent rotary transmission device (13, 14).

3. A pressure-swing adsorption type gas separator system as claimed in Claim 2, further characterized in that said intermittent rotary transmission device is formed of a gear type intermittent rotary transmission device making use of Geneva gears (13, 14).

4. A pressure-swing adsorption type gas separator system as claimed in Claim 1, further characterized in that as the rotary drive source for said four-port rotary valve (26), a drive motor (22) for a pressurizing pump (21) provided in a raw gas line is commonly used, and said four-port rotary valve (26) is connected to said drive motor (22) via speed-reduction means (24, 25).

5. A pressure-swing adsorption type gas separator system as claimed in Claim 4, further characterized in that said speed-reduction means is composed of speed-reduction gears (24, 25).
